(19) Europäisches Patentamt
European Patent Office
Office européen des brevets

(11) **EP 2 887 668 A1**

(12) **EUROPEAN PATENT APPLICATION**

(43) Date of publication:
**24.06.2015 Bulletin 2015/26**

(21) Application number: **13306787.6**

(22) Date of filing: **19.12.2013**

(51) Int Cl.:
*H04N 19/33* (2014.01)     *H04N 19/164* (2014.01)
*H04N 19/154* (2014.01)     *H04N 19/124* (2014.01)
*H04N 19/36* (2014.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Lasserre, Sebastien
35576 CESSON SEVIGNE (FR)**

• **Leleannec, Fabrice
35576 CESSON SEVIGNE (FR)**
• **Serre, Catherine
35576 CESSON SEVIGNE (FR)**

(74) Representative: **Huchet, Anne
Technicolor
1, rue Jeanne d'Arc
92443 Issy-les-Moulineaux Cedex (FR)**

(54)     **Method and device for encoding a high-dynamic range image**

(57)     The present invention generally relates to a method and device for encoding an image. The method is characterized in that it comprises:

- obtaining (100) a luminance component of the image, said luminance component belonging to a perceptual space having a metric whose values are a function of the differences between the visual perceptions of two points of said perceptual space, and a perceptual threshold ($\Delta E$) defining an upper bound of the said metric and enabling a control of the visual losses in a displayed decoded version of the image;

- obtaining (101) a low-spatial-frequency version ($L_{lf}$) of the luminance component of the image;

- encoding (108) the low-spatial-frequency version ($L_{lf}$) of the luminance component of the image;

- obtaining (102) a first differential image ($Diff_1$) which comprises a differential luminance component ($L_r$) which is obtained by calculating the difference between the luminance component (L) of the image and a decoded version ($\widehat{L_{lf}}$) of the low-spatial-frequency version ($L_{lf}$) of the luminance component of the image; and

- encoding (105) the first differential image ($Diff_1$);

- the precision of the encoding of the first differential image ($Diff_1$) depending on the perceptual threshold ($\Delta E$).

The invention relates also to a method and apparatus for decoding a bitstream representing an image.

Fig. 1

**Description**

**1. Field of invention.**

The present invention generally relates to image/video encoding and decoding. In particular, the technical field of the present invention is related to encoding/decoding of an image whose pixel values belong to a high-dynamic range.

**2. Technical background.**

The present section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Low-Dynamic-Range images (LDR images) are images whose luminance values are represented with a limited number of bits (most often 8 or 10). This limited representation does not allow correct rendering of small signal variations, in particular in dark and bright luminance ranges. In high-dynamic range images (HDR images), the signal representation is extended in order to maintain a high accuracy of the signal over its entire range. In HDR images, pixel values are usually represented in floating-point format (either 32-bit or 16-bit for each component, namely float or half-float), the most popular format being openEXR half-float format (16-bit per RGB component, i.e. 48 bits per pixel) or in integers with a long representation, typically at least 16 bits.

A typical approach for encoding an HDR image is to reduce the dynamic range of the image in order to encode the image by means of a traditional encoding scheme (initially configured to encode LDR images).

According to a first approach, a tone-mapping operator is applied to the input HDR image and the tone-mapped image is then encoded by means of a traditional 8-10 bit depth encoding scheme such as JPEG/JPEG200 or MPEG-2, H.264/AVC for video (Karsten Suhring, H.264/AVC Reference Software, http:-//iphome.hhi.de/suehring/tml/download/, the book of I. E. Richardson titled « H.264 and MPEG-4 video compression » published in J. Wiley & Sons in September 2003). Then, an inverse tone-mapping operator is applied to the decoded image and a residual is calculated between the input image and the decoded and inverse-tone-mapped image. Finally, the residual is encoded by means of a second traditional 8-10 bit-depth encoder scheme.

The main drawbacks of this first approach are the use of two encoding schemes and the limitation of the dynamic range of the input image to twice the dynamic range of a traditional encoding scheme (16-20 bits).

According to a second approach, the input HDR image is converted in order to get a visually lossless representation of the image pixels in a colour space in which values belong to a dynamic range which is compatible with a traditional 8-10 or an extended 12, 14 or 16 bits depth encoding scheme such as HEVC for example (B. Bross, W.J. Han, G. J. Sullivan, J.R. Ohm, T. Wiegand JCTVC-K1003, "High Efficiency Video Coding (HEVC) text specification draft 9," Oct 2012) and its high bit-depth extensions.

Using a traditional encoding scheme for encoding an HDR image involves using a same bit depth for encoding the whole image. That involves large sizes of the compressed images. Consequently, such typical approaches cannot be used in applications requiring high coding performances such, for example, in a transmission context where high compression rates are required.

**3. Summary of the invention.**

The invention sets out to remedy some of the drawbacks of the prior art with a method for encoding an image, characterized in that it comprises:

- obtaining a luminance component of the image, said luminance component belonging to a perceptual space having a metric whose values are a function of the differences between the visual perceptions of two points of said perceptual space, and a perceptual threshold defining an upper bound of the said metric and enabling a control of the visual losses in a displayed decoded version of the image;
- obtaining a low-spatial-frequency version of the luminance component of the image;
- encoding the low-spatial-frequency version of the luminance component of the image;
- obtaining a first differential image which comprises a differential luminance component which is obtained by calculating the difference between the luminance component of the image and a decoded version of the low-spatial-frequency version of the luminance component of the image; and
- encoding the first differential image;
- the precision of the encoding of the first differential image depending on the perceptual threshold.

Obtaining an expression of a first differential image in a perceptual space and encoding this first differential image in the perceptual space by maintaining the metric values below a perceptual threshold ensures an encoding of that first differential image with a control of the visual losses in a displayed decoded version of the image to encode and even a visual-quasi-lossless encoding of this image according to some specific values of said perceptual threshold.

The dynamic range of the first differential image may be then reduced and the first differential image may be encoded with few bits by means of a traditional encoding/decoding scheme when the dynamic range is limited to a number of bits adapted to such kind of encoding/decoding scheme.

The combination of the features allows thus an optimal tradeoff between a high compression rate of the luminance component of the image to encode, few visually losses and low encoding/decoding complexity.

According to an embodiment, the method further comprises:

- obtaining a decoded version of the first differential image;
- obtaining a second differential image by calculating the difference between the decoded version of the encoded first differential image and the first differential image; and
- encoding said second differential image;
- the precision of the encoding of the second differential image depending on the perceptual threshold.

Because the second differential image is expressed in the perceptual space and encoded in the perceptual space by maintaining the metric values below a perceptual threshold, the visual losses of the encoded second differential image is also under control. The perceptual threshold may then be chosen to get a visual-lossless encoding of the image.

Moreover, the dynamic range of the second differential image may be then reduced and the second differential image may be encoded with few bits by means of a traditional encoding/decoding scheme when the dynamic range is limited to a number of bits adapted to such kind of encoding/decoding scheme.

According to an embodiment, the perceptual threshold is determined according to reference lighting conditions of the display of a decoded version of the encoded image and the decoded version of the low-spatial-frequency version of the luminance component of the image.

According to an embodiment, the perceptual threshold is determined from the ratio of the brightness value of the decoded version of the low-spatial-frequency version of the luminance component of the image over a maximal environmental brightness value.

According to an embodiment, each component of a first and/or second differential image is normalized by means of the perceptual threshold and the normalized first and/or second differential image is then encoded at a constant encoding precision.

According to an embodiment, at least one parameter of the encoding of a first and/or second differential image depends on the perceptual threshold.

According to an embodiment, the first differential image is encoded with loss.

According to an embodiment, the second differential image is lossless encoded.

According to an embodiment, the image further comprising at least one color component which belongs to the perceptual space, the first differential image further comprises each colour component of the image.

According to another of its aspects, the invention relates to a method for decoding a bitstream representing an image, characterized in that it comprises:

- obtaining, by a at least partial decoding of the bitstream, a decoded version of the low-spatial-frequency version of the luminance component of the image, said luminance component belonging to a perceptual space having a metric whose values are a function of the differences between the visual perceptions of two points of said perceptual space, and a perceptual threshold defining an upper bound of the said metric and enabling a control of the visual losses in a displayed decoded version of the image;
- obtaining, by a at least partial decoding of the bitstream, a decoded version of a first differential image comprising a differential luminance component, which represents the difference between a luminance component of the image and the decoded version of the low-spatial-frequency version of the luminance component of the image; and
- obtaining the decoded image by adding together the decoded version of a first differential image and the decoded version of the low-spatial-frequency version of the luminance component of the image;
- the precision of the decoding of the first differential image depending on the perceptual threshold.

According to an embodiment, the method further comprises:

- obtaining, by a at least partial decoding of the bitstream, a decoded version of a second differential image, said decoded version of the second differential image representing the difference between a decoded version of the first differential image and the first differential image; and

- obtaining the decoded image by adding together the decoded version of the first differential image, the decoded version of the second differential image and the decoded version of the low-spatial-frequency version of the luminance component of the image;
- the precision of the decoding of the second differential image depending on the perceptual threshold.

According to an embodiment, a differential image is decoded at a constant precision and each component of the decoded version of the differential image is re-normalized by means of the perceptual threshold/

According to another of its aspects, the invention relates to a device for encoding an image, characterized in that it comprises means for:

- obtaining a luminance component of the image, said luminance component belonging to a perceptual space having a metric whose values are a function of the differences between the visual perceptions of two points of said perceptual space, and a perceptual threshold defining an upper bound of the said metric and enabling a control of the visual losses in a displayed decoded version of the image;
- obtaining a low-spatial-frequency version of the luminance component of the image;
- encoding the low-spatial-frequency version of the luminance component of the image;
- obtaining a first differential image which comprises a differential luminance component which is obtained by calculating the difference between the luminance component of the image and a decoded version of the low-spatial-frequency version of the luminance component of the image; and
- encoding the first differential image;
- the precision of the encoding of the first differential image depending on the perceptual threshold.

According to another of its aspects, the invention relates to a device for decoding a bitstream representing an image, characterized in that it comprises means for:

- obtaining, by a at least partial decoding of the bitstream, a decoded version of the low-spatial-frequency version of the luminance component of the image, said luminance component belonging to a perceptual space having a metric whose values are a function of the differences between the visual perceptions of two points of said perceptual space, and a perceptual threshold defining an upper bound of the said metric and enabling a control of the visual losses in a displayed decoded version of the image;
- obtaining, by a at least partial decoding of the bitstream, a decoded version of a first differential image comprising a differential luminance component, which represents the difference between a luminance component of the image and the decoded version of the low-spatial-frequency version of the luminance component of the image; and
- obtaining the decoded image by adding together the decoded version of a first differential image and the decoded version of the low-spatial-frequency version of the luminance component of the image;
- the precision of the decoding of the first differential image depending on the perceptual threshold.

According to an embodiment, the device further comprises means for obtaining reference lighting conditions of the display of a decoded version of the encoded image.

The specific nature of the invention as well as other objects, advantages, features and uses of the invention will become evident from the following description of a preferred embodiment taken in conjunction with the accompanying drawings.

**4. List of figures.**

The embodiments will be described with reference to the following figures:

- **Fig. 1** shows a block diagram of the steps of a method for encoding an image I in accordance with an embodiment of the invention;
- **Fig. 2** shows a block diagram of the steps of a method for decoding a bitstream representing an image I in accordance with an embodiment of the invention;
- **Fig. 3** shows an example of an architecture of a device; and
- **Fig. 4** shows two remote devices communicating over a communication network.

**5. Detailed description of a preferred embodiment of the invention.**

The present invention will be described more fully hereinafter with reference to the accompanying figures, in which embodiments of the invention are shown. This invention may, however, be embodied in many alternate forms and should not be construed as limited to the embodiments set forth herein. Accordingly, while the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention as defined by the claims. Like numbers refer to like elements throughout the description of the figures.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

Although some of the diagrams include arrows on communication paths to show a primary direction of communication, it is to be understood that communication may occur in the opposite direction to the depicted arrows.

Some embodiments are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "one embodiment" or "an embodiment" means that a particular feature, structure, or characteristic described in connection with the embodiment can be included in at least one implementation of the invention. The appearances of the phrase "in one embodiment" or "according to an embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

While not explicitly described, the present embodiments and variants may be employed in any combination or sub-combination.

The invention is described for encoding/decoding an image but extends to the encoding/decoding of a sequence of images (video) because each image of the sequence is sequentially encoded/decoded as described below.

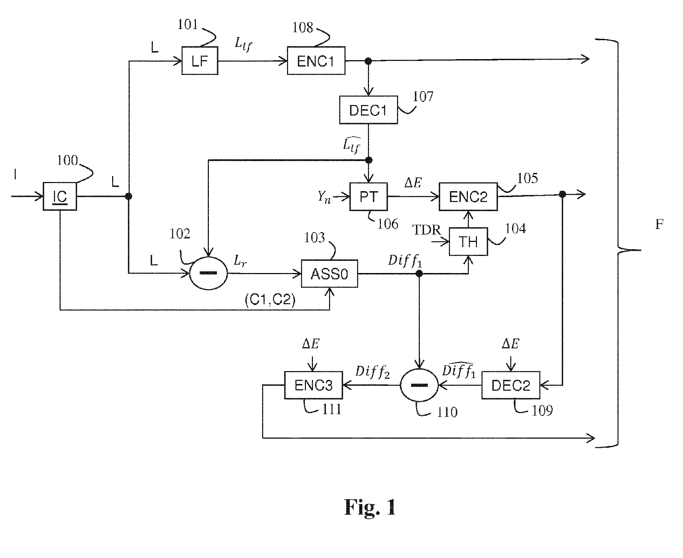

**Fig. 1** shows a block diagram of the steps of a method for encoding an image I in accordance with an embodiment of the invention.

In step 100, a module IC obtains each component of the image block B to be encoded. The image block B comprises a luminance component L and potentially at least one colour component $C(i)$ with i an index which identifies a colour component of the image block B. The components of the image block B belong to a perceptual space, usually a 3D space, i.e. the image block B comprises a luminance component L and potentially at least one colour component $C(i)$, for example two called C1 and C2 in what follows.

But the invention isn't limited neither to a grey image (no colour component) nor to an image with one, two or more colour components. When a grey level image is encoded as described below, do not consider the parts of the description which refer to the colour components.

A perceptual space has a metric $d((L, C1, C2), (L', C1', C2'))$ whose values are representative of, preferably proportional to, the differences between the visual perceptions of two points of said perceptual space.

Mathematically speaking, the metric $d((L, C1, C2), (L', C1', C2'))$ is defined such that a perceptual threshold $\Delta E_0$ (also referred to as the JND, Just Noticeable Difference) exists below which a human being is not able to perceive a visual difference between two colours of the perceptual space, i.e.

$$d\big((L, C1, C2), (L', C1', C2')\big) < \Delta E_0, \qquad (1)$$

and this perceptual threshold is independent of the two points (L, *C*1, C2) and (*L', C*1*', C2'*) of the perceptual space.

Thus, encoding an image whose components belong to a perceptual space in order that the metric d of equation (1) stays below the perceptual threshold $\Delta E_0$ ensures that the displayed decoded version of the image is visually lossless.

According to an embodiment, the metric may be calculated on a pixel base.

It may be noted that, in practice, it is easier to control the three following inequalities individually:

$$d(L, L') < \Delta E_0^L, \qquad d(C1, C1') < \Delta E_0^{C1} \ \text{ and } \ d(C2, C2') < \Delta E_0^{C2}$$

It may be noted that, if the equation (1) is fulfilled with a perceptual threshold greater than $\Delta E_0$, it is said, in what follows, that the encoded image is visually controlled, i.e. the visual losses in a displayed decoded version of this image are controlled.

When the image I comprises components belonging to a non perceptual space such as (R,G,B) for example, a perceptual transform is applied to the image I in order to obtain a luminance component L and potentially two colours components C1 and C2 which belong to the perceptual space.

Such a perceptual transform is defined from the lighting conditions of the display and depends on the initial colour space.

For example, assuming the initial space is the (R,G,B) colour space, the image I is first transformed to the well-known linear space (X, Y, Z) (an inverse gamma correction may be potentially needed) and the resulting image is then transformed from reference lighting conditions of the display of a decoded version of the encoded image which are here a 3D vector of values $(X_n, Y_n, Z_n)$ in the (X,Y,Z) space.

Consequently, for example, such a perceptual transform is defined as follows when the perceptual space LabCIE1976 is selected:

$$L^* = 116 f(Y/Y_n) - 16$$

$$a^* = 500\big(f(X/X_n) - f(Y/Y_n)\big)$$

$$b^* = 200\big(f(Y/Y_n) - f(Z/Z_n)\big)$$

where f is a conversion function for example given by:

$$f(r) = r^{1/3} \quad if \ r > (6/29)^3$$

$$f(r) = \frac{1}{3} * \left(\frac{29}{6}\right)^2 * r + \frac{4}{29}$$

*otherwise*

The following metric may be defined on the perceptual space LabCIE1976:

$$d\big((L^*, a^*, b^*), (L^{*\prime}, a^{*\prime}, b^{*\prime})\big)^2 = (\Delta L^*)^2 + (\Delta a^*)^2 + (\Delta b^*)^2 < (\Delta E_0)^2$$

with $\Delta L^*$ being the difference between the luminance components of the two colours (*L\*, a\*, b\**) and (*L\*', a\*', b\**) and $\Delta a^*$ (respectively $\Delta b^*$) being the difference between the colour components of these two colours.

According to another example, when the perceptual space *Lu\*v\** is selected, a perceptual transform is defined as follows:

$$u^* = 13L(u' - u'_{white}) \text{ and } v^* = 13L(v' - v'_{white})$$

where

$$u' = \frac{4X}{X+15Y+3Z}, \qquad v' = \frac{9Y}{X+15Y+3Z},$$

and

$$u'_{white} = \frac{4X_n}{X_n+15Y_n+3Z_n}, \qquad v'_{white} = \frac{9Y_n}{X_n+15Y_n+3Z_n}.$$

The following Euclidean metric may be defined on the perceptual space $Lu^*v^*$:

$$d\big((L^*, u^*, v^*), (L^{*'}, u^{*'}, v^{*'})\big)^2 = (\Delta L)^2 + (\Delta u^*)^2 + (\Delta v^*)^2$$

with $\Delta L^*$ being the difference between the luminance components of the two colours ($L^*$, $u^*,v^*$) and ($L^{*'},u^{*'},v^{*'}$) and $\Delta u^*$ (respectively $\Delta v^*$) being the difference between the colour components of these two colours.

The invention is not limited to the perceptual space LabCIE1976 but mat be extended to any type of perceptual space such as the LabCIE1994, LabCIE2000, which are the same Lab space but with a different metric to measure the perceptual distance, or any other Euclidean perceptual space for instance. Other examples are LMS spaces and IPT spaces. A condition is that the metric shall be defined on these perceptual spaces in order that the metric is preferably proportional to the perception difference; as a consequence, a homogeneous maximal perceptual threshold $\Delta E_0$ exists below which a human being is not able to perceive a visual difference between two colours of the perceptual space.

In step 101, a module LF obtains a low-spatial-frequency version $L_{lf}$ of the luminance component L of the image I.

According to an embodiment, the module LF is configured to calculate the low-spatial-frequency version $L_{lf}$ per block by assigning to each pixel of a block a mean value computed by averaging the pixel values of the block.

The invention is not limited to a specific embodiment for computing a low-spatial-frequency version of the image I and any low-pass filtering or down-sampling of the luminance component of the image I may be used.

In step 108, the low-spatial-frequency $L_{lf}$ is encoded by means of an encoder ENC1.

The output from step 108 is added to a bitstream F which may be store and/or transmitted over a communication network.

In step 102, a first differential image $Diff_1$ is obtained. The first differential image $Diff_1$ comprises a differential luminance component $L_r$ which is obtained by calculating the difference between the luminance component L and a decoded version $\widehat{L_{lf}}$ of the encoded low-spatial-frequency version $L_{lf}$.

Potentially, at step 103, a module ASS0 is configured to associate each colour component of the image I with the differential luminance component $L_r$ in order to get a first differential image $Diff_1$. According to the example illustrated in **Fig. 1,** the image I comprises two colour components C1 and C2. Then, the colour components C1 and C2 are associated with the differential luminance component $L_r$ in order to get a first differential image $Diff_1$ comprising three components ($L_r$, C1, C2).

In step 105, the first differential image $Diff_1$ is encoded by means of an encoder ENC2.

The output from step 105 is added to the bitstream F.

According to an embodiment of the method for encoding the image I, in step 109, a decoded version of the first differential image $\widehat{Diff_1}$ is obtained by decoding the encoded first differential image by means of a decoder DEC2, in step 110, a second differential image $Diff_2$ is then obtained by calculating the difference between the decoded version of the first differential image $\widehat{Diff_1}$ and the first differential image $Diff_1$, and in step 111, the second differential image

*Diff₂* is encoded by means of an encoder ENC3.

The output from step 111 is added to the bitstream F.

Potentially, in step 105, 108 and/or 111, the encoder ENC1, ENC2 and/or ENC3 comprises an entropy encoding.

The coding precision of the encoder ENC2 and/or ENC3 depends on a perceptual threshold $\Delta E$ defining an upper bound of the metric in the perceptual space and enabling a control of the visual losses in a displayed decoded version of the image.

In step 106, the perceptual threshold $\Delta E$ is determined according to reference lighting conditions of the display of a decoded version of the encoded image and the decoded version $\widehat{L_{lf}}$ of the low-spatial-frequency version $L_{lf}$.

The brightness of the low-spatial-frequency version $L_{lf}$ is not constant over the image but changes locally. For example, if the low-spatial-frequency version $L_{lf}$ is calculated per block by assigning to each pixel of a block a mean value computed by averaging the pixel values of the block, the perceptual threshold $\Delta E$ is constant over each block but the mean values of two blocks of the image may be different. Consequently, the perceptual threshold $\Delta E$ changes locally according to the brightness values of the image.

The local changes of the perceptual threshold $\Delta E$ are not limited to block-based changes but may extend to any zones defined over the image by means of any operator such as a segmentation operator based for example on the brightness values of the image.

In step 107, the decoded version $\widehat{L_{lf}}$ of the low-spatial-frequency version $L_{lf}$ is obtained by decoding the output from step 108, i.e. by decoding at least partially the bitstream F, by means of a decoder DEC1. Such a decoder DEC1 implements inverse operations compared to the operations of the encoder ENC1 (step 108).

According to an embodiment of the step 106, assuming, during the display of the image, a potential increase of the lighting until a maximal environmental brightness value $Y_n$, the perceptual threshold $\Delta E$ is determined from the ratio of the brightness value $\widehat{Y_{lf}}$ of the decoded version $\widehat{L_{lf}}$ of the low-spatial-frequency version $L_{lf}$ over the maximal environmental brightness value $Y_n$.

According to an embodiment of the step 106, when the coding degradation over the maximal environmental brightness value is forbidden, the perceptual threshold $\Delta E$ is then given by:

$$\Delta E = \Delta E_{enc}\left(\frac{\widehat{Y_{lf}}}{Y_n}\right)^{\frac{1}{3}} = \frac{\Delta E_{enc}(\widehat{L_{lf}}+16)}{116} \quad (2)$$

with $(X_n, Y_n, Z_n)$ being reference lighting conditions of the display of a decoded version of the encoded image and $\widehat{Y_{lf}}$ being a value which represents the brightness of the decoded version $\widehat{L_{lf}}$ of the low-spatial-frequency version $L_{lf}$ and $\Delta Eenc$ being a perceptual encoding parameter. Typically, $\Delta Eenc$ is chosen close to $\Delta E_0$ for visually lossless encoding and greater than $\Delta E_0$ for an encoding with a control of the visual losses in a decoded version of the encoded image.

Thus, using such a perceptual threshold $\Delta E$ allows adapting the encoding to the environmental lighting conditions of the display.

Alternatively, the reference lighting conditions of the display of a decoded version of the encoded image $(X_n, Y_n, Z_n)$ which have a local character, may be replaced by global reference lighting conditions of the display of a decoded version of the encoded image defined by $(X_n', Y_n', Z_n') = (X_n, Y_n, Z_n)\,\widehat{Y_{lf}}/Y_n$.

From a coding point of view (color coding), this replacement is equivalent to the choice of the perceptual threshold $\Delta E$ (2) because the encoding with a precision equals to $\Delta E$ of a color component $a^{*'}$ in the color space LabCIE1976, which is given by

$$a^* = 500\big(f(X/X_n) - f(Y/Y_n)\big) \approx 500\big((X/X_n)^{1/3} - (Y/Y_n)^{1/3}\big)$$

is equivalent to the encoding with a precision equals to $\Delta Eenc$ of the color component $a^{*'}$ which is given by

$$a^{*'} = 500\big(f(X/X_n') - f(Y/Y_n')\big) \approx 500\big((X/X_n')^{1/3} - (Y/Y_n')^{1/3}\big)$$

The same remark applies to the other component $b^*$. Therefore, instead of changing the perceptual space locally, one just adapts the threshold from $\Delta Eenc$ to $\Delta E$.

According to an embodiment of the step 106, to avoid a sub-coding of the parts of the image having high brightness values, the perceptual threshold $\Delta E$ is given by

$$\Delta E = \Delta E_{enc} \, min\left\{ \left(\frac{\widehat{Y_{lf}}}{Y_n}\right)^{1/3}, E_{max} \right\}$$

where an upper-bound is set to $\Delta E_{enc} E_{max}$, typically, $E_{max}$ is set to 1. This last equation means that the brightness of the decoded version $\widehat{L_{lf}}$ of the low-spatial-frequency version $L_{lf}$ is never taken bigger than the maximal environmental brightness value $Y_n$.

On the other hand, in order to avoid over-coding of the parts of the image having very low brightness values, the perceptual threshold $\Delta E$ in then is given by

$$\Delta E = \Delta E_{enc} \, max\left\{ \left(\frac{\widehat{Y_{lf}}}{Y_n}\right)^{1/3}, E_{min} \right\}$$

where a lower-bound is set to $\Delta E_{enc} E_{min}$; typically, $E_{min}$ is set to about 1/5. This is due to a contrast masking effect of the dark local brightness of the decoded version $\widehat{L_{lf}}$ of the low-spatial-frequency version $L_{lf}$ by the maximal environmental brightness value $Y_n$.

A combination of both bounds is simply obtained by

$$\Delta E = \Delta E_{enc} \, min\left\{ max\left\{ \left(\frac{\widehat{Y_{lf}}}{Y_n}\right)^{1/3}, E_{min} \right\}, E_{max} \right\}$$

According to a variant of the method, at step 104, a threshold TH is applied to the component(s) of the first differential image $Diff_1$ in order to limit the dynamic range of each of its components to a targeted dynamic ranges TDR.

In the following, the expression "a differential image" refers to either a first differential image $Diff_1$ or a second differential image $Diff_2$ and the expression "according to an embodiment of the step 105 and/or of the step 111" means that the expression "a differential image" refers to either the first differential image $Diff_1$ mentions in step 105 or the second differential image $Diff_2$ mentions in step 111 or both when this embodiment applies simultaneously to the steps 105 and 111. Similarly, the expression "according to an embodiment of the step 109 and/or of the step 220" means that the expression "a differential image" refers to either the first differential image $Diff_1$ mentions in step 109 or the second differential image $Diff_2$ mentions in step 220 or both when this embodiment applies simultaneously to steps 109 and 220.

According to an embodiment of the step 105 and/or 111, each component of a differential image is normalized by means of the perceptual threshold $\Delta E$, and the normalized differential image is then encoded at a constant encoding precision.

Consequently, the precision of the encoding is thus a function of the perceptual threshold $\Delta E$ which changes locally and which is the optimal precision assuming that the perceptual space is ideal. By doing so, a precision to 1 of the encoding of the normalized differential image ensures that the differential image is encoded to a precision of $\Delta E$ as required.

According to an embodiment of the step 105 and/or 111, the normalization of a component of a differential image by means of the perceptual threshold $\Delta E$ is the division of this component by a value which is a function of the perceptual threshold $\Delta E$.

Mathematically speaking, a component C of the differential image, including both the differential luminance component and potentially each colour component, is then normalized, for example, as follows to get a normalized component $C^N$:

$$C^N = \frac{C}{\Delta E^\alpha}$$

with $\alpha$ being a value equals, for example, to 0.5 or 1.

According to another embodiment of the step 105 and/or111, at least one parameter of the encoding of a differential image depends on the perceptual threshold $\Delta E$.

For example, a parameter of the quantification QP of such an encoding depends on the perceptual threshold $\Delta E$. Actually, such a parameter QP exists in image/video coders like h264/AVC and HEVC and may be defined locally for each coding block. In this example, an encoding with locally (block by block) varying precision through the differential image is performed by choosing the local QP insuring a coding precision of the perceptual threshold $\Delta E$ for each block.

Preferably, the encoder ENC2 is an encoder with loss which provides a control, in the frequency domain, on the distortion between the image and a decoded version of the encoded image and the encoder ENC3 is a lossless or quasi lossless encoder which provides a control, in the pixel (spatial) domain, on the distortion between the image and a decoded version of the encoded image.

Using an encoder ENC2 with loss provides advantages when low quality encoded image are required because such kind of encoder provides higher coding performance than a lossless encoder ENC3.

However for lossless coding, an encoder ENC3 which provides a control on, a pixel base, the distortion between the image and a decoded version of the encoded image (i.e. a control based on the $L^\infty$ norm), performs better than an encoder ENC2 which cannot easily ensures the desired visually-lossless quality per pixel because it provides a control on the mean square error, i.e. the $L^2$ norm.

It may be noted that there exists an optimal encoding point at which the encoding by an encoder ENC2 is stopped to switch to the encoding by an encoder ENC3 such that it ensures a minimum size of the encoded image. The existence of such a switching point is a justification for the use of two encoders ENC2 and ENC3.

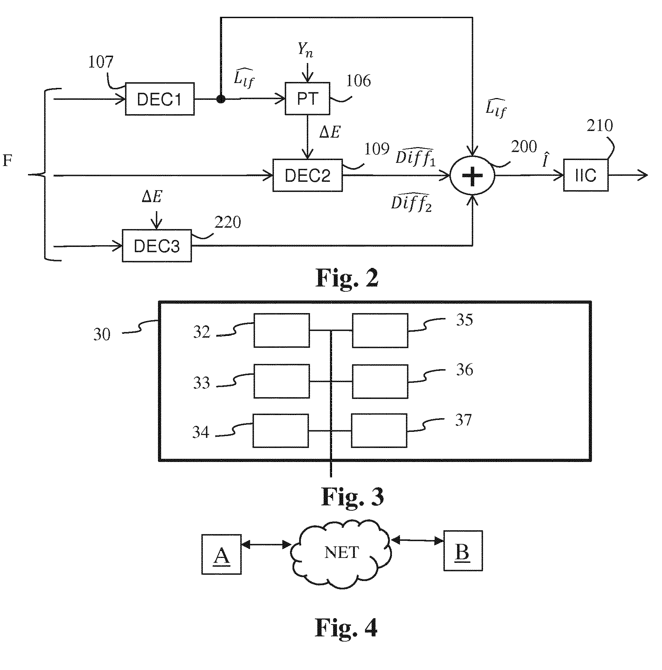

**Fig. 2** shows a block diagram of the steps of a method for decoding a bitstream representing an image I in accordance with an embodiment of the invention.

It may be noted that, in what follows, is considered a bitstream F which represents an image I which comprises a luminance component and potentially at least one colour component. The component(s) of the image I belong to a perceptual colour space as described above.

In step 107, as described above, a decoded version $\widehat{L_{lf}}$ of the low-spatial-frequency version of the luminance component of the image I is obtained by decoding at least partially the bitstream F, by means of a decoder DEC1.

In step 109, a decoded version of a first differential image $\widehat{Diff_1}$ is obtained by a at least partial decoding of the bitstream F by means of the decoder DEC2.

Thus, when the image I represented by the bitstream F is a grey level image, the decoded version of a first differential image $\widehat{Diff_1}$ comprises a differential luminance component $L_r$ which represents the difference between a luminance component L of the image I and the decoded version $\widehat{L_{lf}}$ of the low-spatial-frequency version of the luminance component of the image I. When the image I represented by the bitstream F is a colour image, i.e an image having a luminance component L and at least one colour component, the decoded version of a first differential image $\widehat{Diff_1}$ comprises the differential luminance component $L_r$, which represents the difference between a luminance component L of the image I and the decoded version $\widehat{L_{lf}}$ of the low-spatial-frequency version of the luminance component of the image I, and each of said at least one color component of the image I.

In step 200, the decoded version of a first differential image $\widehat{Diff_1}$ and the decoded version $\widehat{L_{lf}}$ of the low-spatial-frequency version of the luminance component of the image are added together to get the decoded image $\hat{I}$.

According to an embodiment of the method for decoding the bitstream F, in step 220, a decoded version of a

second differential image $\widehat{Diff_2}$ is obtained by a at least partial decoding of the bitstream F by means of a decoder DEC3. The decoded version of the second differential image $\widehat{Diff_2}$ represents the difference between a decoded version of the first differential image $\widehat{Diff_1}$ and the first differential image $Diff_1$.

Then, in step 200, the decoded version of the first differential image $\widehat{Diff_1}$ , the decoded version of the second differential image $\widehat{Diff_2}$ and the decoded version $\widehat{L_{lf}}$ of the low-spatial-frequency version of the luminance component of the image I are added together to get the decoded image $\hat{I}$.

The decoding precision of the decoder DEC2 and/or DEC3 depends on a perceptual threshold $\Delta E$ defining an upper bound of a metric in a perceptual space described above and enabling a control of the visual losses in a displayed decoded version of the image. The precision of the decoding is thus a function of the perceptual threshold which changes locally.

As described above in relation with the steps 106 and 107, the perceptual threshold $\Delta E$ is determined, according to an embodiment, according to reference lighting conditions of the display of a decoded version of the encoded image (the same as those used for encoding) and the decoded version $\widehat{L_{lf}}$ of the low-spatial-frequency version of the luminance component of the image I.

According to an embodiment of the step 109 and/or step 220, when each component of a differential image has been normalized by means of the perceptual threshold $\Delta E$, the differential image is decoded at a constant precision and each component of the decoded version of the differential image $Diff_1$, $Diff_2$ is re-normalized by the means the perceptual threshold $\Delta E$.

According to an embodiment of the step 109 and/or step 220, the renormalization is the multiplication by a value which is a function of the perceptual threshold $\Delta E$.

Mathematically speaking, each component $\widehat{C^N}$ of the decoded version of the differential image is re-normalized, for example, as follows:

$$\hat{C} = \widehat{C^N} \cdot \Delta E^{\alpha}$$

with $\alpha$ being a value equals, for example, to 0.5 or 1.

Potentially, during the steps 107, 109 and 220, data of the bitstream F are also at least partially entropy-decoded.

The decoders DEC1, respectively DEC2 and DEC3, are configured to decode data which have been encoded by the encoders ENC1, respectively ENC2 and ENC3.

The encoders ENC1, ENC2 and/or ENC3 (and decoders DEC1, DEC2 and/or DEC3) are not limited to a specific encoder (decoder) but when an entropy encoder (decoder) is required, an entropy encoder such as a Huffmann coder, an arithmetic coder or a context adaptive coder like Cabac used in h264/AVC or HEVC is advantageous.

The encoder ENC2 (and decoder DEC2) is not limited to a specific encoder which may be, for example, an image/video coder with loss like JPEG, JPEG2000, MPEG2, h264/AVC or HEVC.

The encoder ENC3 (and decoder DEC3) is not limited to a specific lossless or quasi lossless encoder which may be, for example, an image coder like JPEG lossless, h264/AVC lossless or a trellis based encoder.

According to a variant, in step 210, a module IIC is configured to apply an inverse perceptual transform to the decoded image $\hat{I}$, output from step 200. For example, the estimate of the decoded image $\hat{I}$ is transformed to the well-known space (X, Y, Z).

When the perceptual space LabCIE1976 is selected, the inverse perceptual transform is given by:

$$X = X_n f^{-1}\left(\frac{1}{116}(L^* + 16) + \frac{1}{500}a^*\right)$$

$$Y = Y_n f^{-1}\big(1/116(L^* + 16)\big)$$

$$Z = Z_n f^{-1}\left(\frac{1}{116}(L^* + 16) + \frac{1}{200}b^*\right)$$

When the perceptual space Luv is selected, the inverse perceptual transform is given by:

$$X = \frac{9Yu'}{4v'}$$

$$Y = Y_n f^{-1}\left(\frac{1}{116}(L^* + 16)\right)$$

$$Z = \frac{3Y(4 - u')}{4v'} - 5Y$$

Potentially, the image in the space (X,Y,Z) is inverse transformed to get the decoded image in the initial space such as (R,G,B) space.

On **Fig. 1** and **2,** the modules are functional units, which may or not be in relation with distinguishable physical units. For example, these modules or some of them may be brought together in a unique component or circuit, or contribute to functionalities of a *software. A contrario,* some modules may potentially be composed of separate physical entities. The apparatus which are compatible with the invention are implemented using either pure hardware, for example using dedicated hardware such ASIC or FPGA or VLSI, respectively «Application Specific Integrated Circuit », « Field-Programmable Gate Array », « Very Large Scale Integration », or from several integrated electronic components embedded in a device or from a blend of hardware and software components.

**Fig. 3** represents an exemplary architecture of a device 30 which may be configured to implement a method described in relation with **Fig. 1** to **2.**

Device 30 comprises following elements that are linked together by a data and address bus 31:

- a microprocessor 32 (or CPU), which is, for example, a DSP (or Digital Signal Processor);
- a ROM (or Read Only Memory) 33;
- a RAM (or Random Access Memory) 34;
- an I/O interface 35 for reception of data to transmit, from an application; and
- a battery 36

According to a variant, the battery 36 is external to the device. Each of these elements of **Fig. 3** are well-known by those skilled in the art and won't be disclosed further. In each of mentioned memory, the word « register » used in the specification can correspond to area of small capacity (some bits) or to very large area (e.g. a whole program or large amount of received or decoded data). ROM 33 comprises at least a program and parameters. Algorithm of the methods according to the invention is stored in the ROM 33. When switched on, the CPU 32 uploads the program in the RAM and executes the corresponding instructions.

RAM 34 comprises, in a register, the program executed by the CPU 32 and uploaded after switch on of the device 30, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to an embodiment, the device further comprises means for obtaining reference lighting conditions of the display of a decoded version of the encoded image such as a maximal environmental brightness value $Y_n$.

According to an embodiment, the device comprises a display 37 and the means for obtaining reference lighting conditions of the display of a decoded version of the encoded image are configured to determine such reference lighting conditions of the display of a decoded version of the encoded image from some characteristics of the display 37 or from lighting conditions around the display 36 which are captured by the apparatus.

For instance, the means for obtaining a maximal environmental brightness value $Y_n$ are a sensor attached to the display and which measures the environmental conditions. A photodiode or the like may be used to this purpose.

According to an embodiment illustrated in **Fig. 4,** in a transmission context between two remote devices A and B over a communication network NET, the device A comprises means which are configured to implement a method for encoding an image as described in relation with the **Fig. 1** and the device B comprises means which are configured to implement a method for decoding as described in relation with **Fig. 2.** The device B may also comprise a display 37.

The devices A and B are both configured to know the reference lighting conditions of the display of a decoded version of the encoded image such a same maximal environmental brightness value $Y_n$.

For example, the devices A and B store the same reference lighting conditions of the display of a decoded version of the encoded image such a same maximal environmental brightness value $Y_n$.

Alternatively, the device B is configured to obtain the reference lighting conditions of the display of a decoded version of the encoded image such a maximal environmental brightness value $Y_n$ and to send it to the device A. The device A is then configured to receive such a transmitted reference lighting conditions of the display of a decoded version of the encoded image such a maximal brightness value $Y_n$.

Inversely, the device A is configured to obtain the reference lighting conditions of the display of a decoded version of the encoded image such a maximal environmental brightness value $Y_n$, for example from a storing memory, and to send it to the device B. The device B is then configured to receive such a transmitted reference lighting conditions of the display of a decoded version of the encoded image such a maximal environmental brightness environmental value $Y_n$.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. Method for encoding an image, **characterized in that** it comprises:

    - obtaining (100) a luminance component of the image, said luminance component belonging to a perceptual space having a metric whose values are a function of the differences between the visual perceptions of two points of said perceptual space, and a perceptual threshold ($\Delta E$) defining an upper bound of the said metric and enabling a control of the visual losses in a displayed decoded version of the image;
    - obtaining (101) a low-spatial-frequency version ($L_{lf}$) of the luminance component of the image;
    - encoding (108) the low-spatial-frequency version ($L_{lf}$) of the luminance component of the image;
    - obtaining (102) a first differential image *(Diff₁)* which comprises a differential luminance component ($L_r$) which is obtained by calculating the difference between the luminance component (L) of the image and a decoded version $\left(\widehat{L_{lf}}\right)$ of the low-spatial-frequency version ($L_{lf}$) of the luminance component of the image; and
    - encoding (105) the first differential image *(Diff₁);*
    - the precision of the encoding of the first differential image *(Diff₁)* depending on the perceptual threshold ($\Delta E$).

2. Method according to the claim 1, wherein it further comprises:

    - obtaining (109) a decoded version of the first differential image $\left(\widehat{Diff_1}\right)$;
    - obtaining (110) a second differential image (*Diff₂*) by calculating the difference between the decoded version of the encoded first differential image $\left(\widehat{Diff_1}\right)$, and the first differential image (*Diff₁*); and
    - encoding (111) said second differential image (*Diff₂*);
    - the precision of the encoding of the second differential image depending on the perceptual threshold ($\Delta E$).

3. Method according to the claim 1 or 2, wherein the perceptual threshold ($\Delta E$) is determined according to reference lighting conditions of the display of a decoded version of the encoded image and the decoded version $\left(\widehat{L_{lf}}\right)$ of the low-spatial-frequency version ($L_{lf}$) of the luminance component of the image.

4. Method according to the claim 3, wherein the perceptual threshold ($\Delta E$) is determined from the ratio of the brightness value ($Y_{lf}$) of the decoded version $\left(\widehat{L_{lf}}\right)$ of the low-spatial-frequency version ($L_{lf}$) of the luminance component of the image over a maximal environmental brightness value ($Y_n$).

5. Method according to any of the previous claims, wherein each component of a first and/or second differential image (*Diff₁ Diff₂*) is normalized by means of the perceptual threshold ($\Delta E$) and the normalized first and/or second differential image is then encoded at a constant encoding precision (105, 111).

6. Method according to one of the claims 1 to 4, wherein at least one parameter of the encoding of a first and/or second differential image (*Diff₁,Diff₂*) depends on the perceptual threshold ($\Delta E$).

7. Method according to one of the previous claim, wherein the first differential image (*Diff₁*) is encoded with loss.

8. Method according to one of the claims 2 to 7, wherein the second differential image (*Diff₂*) is lossless encoded.

9. Method according to any of the previous claim, wherein the image further comprising at least one color component which belongs to the perceptual space (100), the first differential image (*Diff₁*) further comprises each colour component of the image.

10. Method for decoding a bitstream representing an image, **characterized in that** it comprises:

    - obtaining (107), by a at least partial decoding of the bitstream, a decoded version $\left(\widehat{L_{lf}}\right)$ of the low-spatial-frequency version of the luminance component of the image, said luminance component belonging to a perceptual space having a metric whose values are a function of the differences between the visual perceptions of two points of said perceptual space, and a perceptual threshold ($\Delta E$) defining an upper bound of the said metric and enabling a control of the visual losses in a displayed decoded version of the image;
- obtaining (109), by a at least partial decoding of the bitstream, a decoded version of a first differential image $\left(\widehat{Diff_1}\right)$ comprising a differential luminance component ($L_r$), which represents the difference between a luminance component (L) of the image and the decoded version $\left(\widehat{L_{lf}}\right)$ of the low-spatial-frequency version of the luminance component of the image; and
- obtaining (200) the decoded image ($\hat{I}$) by adding together the decoded version of a first differential image $\left(\widehat{Diff_1}\right)$ and the decoded version $\left(\widehat{L_{lf}}\right)$ of the low-spatial-frequency version of the luminance component of the image;
- the precision of the decoding of the first differential image ($Diff_1$) depending on the perceptual threshold ($\Delta E$).

11. Method according to the claim 10, wherein it further comprises:

- obtaining (220), by a at least partial decoding of the bitstream, a decoded version of a second differential image $\left(\widehat{Diff_2}\right)$, said decoded version of the second differential image $\left(\widehat{Diff_2}\right)$ representing the difference between a decoded version of the first differential image $\left(\widehat{Diff_1}\right)$ and the first differential image ($Diff_1$); and
- obtaining (200) the decoded image ($\hat{I}$) by adding together the decoded version of the first differential image $\left(\widehat{Diff_1}\right)$, the decoded version of the second differential image $\left(\widehat{Diff_2}\right)$ and the decoded version $\left(\widehat{L_{lf}}\right)$ of the low-spatial-frequency version of the luminance component of the image;
- the precision of the decoding of the second differential image ($Diff_2$) depending on the perceptual threshold ($\Delta E$).

12. Method according to the claim 10 or 11, wherein a differential image $\left(\widehat{Diff_1}, \widehat{Diff_2}\right)$ is decoded at a constant precision and each component of the decoded version of the differential image is re-normalized by means of the perceptual threshold ($\Delta E$).

13. Device for encoding an image, **characterized in that** it comprises means for:

- obtaining a luminance component of the image, said luminance component belonging to a perceptual space having a metric whose values are a function of the differences between the visual perceptions of two points of said perceptual space, and a perceptual threshold ($\Delta E$) defining an upper bound of the said metric and enabling a control of the visual losses in a displayed decoded version of the image;
- obtaining a low-spatial-frequency version ($L_{lf}$) of the luminance component of the image;
- encoding the low-spatial-frequency version ($L_{lf}$) of the luminance component of the image;
- obtaining a first differential image *(Diff$_1$)* which comprises a differential luminance component ($L_r$) which is obtained by calculating the difference between the luminance component (L) of the image and a decoded version $\left(\widehat{L_{lf}}\right)$ of the low-spatial-frequency version ($L_{lf}$) of the luminance component of the image; and
- encoding the first differential image ($Diff_1$);
- the precision of the encoding of the first differential image ($Diff_1$) depending on the perceptual threshold ($\Delta E$).

14. Device for decoding a bitstream representing an image, **characterized in that** it comprises means for:

- obtaining, by a at least partial decoding of the bitstream, a decoded version $\left(\widehat{L_{lf}}\right)$ of the low-spatial-frequency version of the luminance component of the image, said luminance component belonging to a perceptual space having a metric whose values are a function of the differences between the visual perceptions of two points of said perceptual space, and a perceptual threshold ($\Delta E$) defining an upper bound of the said metric and enabling a control of the visual losses in a displayed decoded version of the image;

- obtaining, by a at least partial decoding of the bitstream, a decoded version of a first differential image $\left(\widehat{Diff_1}\right)$ comprising a differential luminance component ($L_r$), which represents the difference between a luminance component (L) of the image and the decoded version $\left(\widehat{L_{lf}}\right)$ of the low-spatial-frequency version of the luminance component of the image; and

- obtaining the decoded image $(\hat{I})$ by adding together the decoded version of a first differential image $(\widehat{Diff_1})$ and the decoded version $(\widehat{L_{lf}})$ of the low-spatial-frequency version of the luminance component of the image;

- the precision of the decoding of the first differential image $(Diff_1)$ depending on the perceptual threshold $(\Delta E)$.

15. Device according to the claim 14, further comprising means for obtaining reference lighting conditions of the display of a decoded version of the encoded image.

**Fig. 1**

## Fig. 2

$F$ ⟶ { 
107 DEC1 ⟶ $\widehat{L_{lf}}$ 
$Y_n$ ⟶ PT 106 ⟶ $\Delta E$ 
109 DEC2 ⟶ $\widehat{Diff_1}$ 
$\Delta E$ ⟶ DEC3 220 
$\widehat{L_{lf}}$ 
$\widehat{Diff_2}$ 
200 + ⟶ $\hat{I}$ ⟶ IIC 210 ⟶

**Fig. 2**

30 — [ 32 — 35 · 33 — 36 · 34 — 37 ]

**Fig. 3**

$\underline{A}$ ⟷ NET ⟷ $\underline{B}$

**Fig. 4**

# EP 2 887 668 A1

Europäisches
Patentamt

European
Patent Office

Office européen
des brevets

## EUROPEAN SEARCH REPORT

**Application Number**

EP 13 30 6787

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/081532 A1 (KONINKL PHILIPS ELECTRONICS NV [NL]; KIRENKO IHOR [FR]) 1 September 2005 (2005-09-01) | 1,2, 6-11,13, 14 | INV. H04N19/33 H04N19/164 H04N19/154 H04N19/124 H04N19/36 |
| Y | * abstract; figure 1 * | 3-5,12, 15 | |
| | ----- | | |
| X | EP 2 144 444 A1 (UNIV WARWICK [GB]) 13 January 2010 (2010-01-13) | 1,6, 8-10,13, 14 | |
| Y | * abstract; figure 1 * * paragraph [0025] * | 3-5,12, 15 | |
| | ----- | | |
| X | MEMON N D ET AL: "SIMPLE METHOD FOR ENHANCING THE PERFORMANCE OF LOSSY PLUS LOSSLESS IMAGE COMPRESSION SCHEMES", JOURNAL OF ELECTRONIC IMAGING, SPIE / IS & T, vol. 2, no. 3, 1 July 1993 (1993-07-01), pages 245-252, XP000395397, ISSN: 1017-9909, DOI: 10.1117/12.148253 * abstract * | 1,8,10, 13,14 | |
| | ----- | | **TECHNICAL FIELDS SEARCHED (IPC)** |
| Y | EP 2 317 769 A1 (PANASONIC CORP [JP]) 4 May 2011 (2011-05-04) * paragraphs [0031], [0047], [0061] * * abstract; figure 10 * | 3-5,12, 15 | H04N |
| | ----- | | |

The present search report has been drawn up for all claims

| Place of search | Date of completion of the search | Examiner |
|---|---|---|
| Munich | 11 April 2014 | Oelbaum, Tobias |

EPO FORM 1503 03.82 (P04C01)

**ANNEX TO THE EUROPEAN SEARCH REPORT
ON EUROPEAN PATENT APPLICATION NO.**

EP 13 30 6787

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2014

| Patent document cited in search report | | Publication date | Patent family member(s) | | | Publication date |
|---|---|---|---|---|---|---|
| WO 2005081532 | A1 | 01-09-2005 | CN | 1910932 | A | 07-02-2007 |
| | | | EP | 1709815 | A1 | 11-10-2006 |
| | | | JP | 2007520950 | A | 26-07-2007 |
| | | | KR | 20060132874 | A | 22-12-2006 |
| | | | US | 2009022230 | A1 | 22-01-2009 |
| | | | WO | 2005081532 | A1 | 01-09-2005 |
| EP 2144444 | A1 | 13-01-2010 | EP | 2144444 | A1 | 13-01-2010 |
| | | | ES | 2389458 | T3 | 26-10-2012 |
| | | | US | 2011235720 | A1 | 29-09-2011 |
| | | | WO | 2010003692 | A1 | 14-01-2010 |
| EP 2317769 | A1 | 04-05-2011 | EP | 2317769 | A1 | 04-05-2011 |
| | | | WO | 2011050978 | A1 | 05-05-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I. E. RICHARDSON.** H.264 and MPEG-4 video compression. J. Wiley & Sons, September 2003

- **B. BROSS ; W.J. HAN ; G. J. SULLIVAN ; J.R. OHM ; T. WIEGAND.** *High Efficiency Video Coding (HEVC) text specification draft 9,* October 2012